# EUROPEAN PATENT APPLICATION

(11) **EP 1 434 208 A2**
(43) Date of publication of application: **30.06.2004**
(21) Application number: 03257985.6
(22) Date of filing: 18.12.2003
(51) Int. Cl.: G11B 7/08, F16B 5/06, G11B 21/24, G11B 7/22

(54) **Fixing structure for base plates and disk apparatus therewith**

(30) Priority: 24.12.2002 JP 2002372424
(71) Applicant: Mitsumi Electric Co., Ltd., Tama-shi, Tokyo 206-8567 (JP)
(72) Inventor: Yoshino, Shigeru Mitsumi Electric Co., Ltd, Atsugi-Shi Kanagawa 243-8533 (JP); Yumitori, Hiroaki Mitsumi Electric Co., Ltd, Atsugi-Shi Kanagawa 243-8533 (JP); Furuya, Hitoshi Mitsumi Electric Co., Ltd, Atsugi-Shi Kanagawa 243-8533 (JP)
(74) Representative: Rees, Alexander Ellison

(57) **Abstract**

A fixing structure is disclosed in which a first metal board (such as a weight board (100)) is fixed to a second metal board (such as a baseboard (62)) without using screws. When an eccentric rotor (111) provided to the second metal board is rotated by a screwdriver, the eccentric rotor pushes against an aperture edge (101a) provided in the first metal board, thereby sliding the first metal board in relation to the second metal board. The first metal board and the second metal board are locked by hooks (121,122,123) provided on the second metal board, the hooks locking against additional aperture edges (103a,104a,105a) provided in the first metal board.

## Description

### BACKGROUND OF THE INVENTION

### 1. Field of the Invention

The present invention generally relates to a fixing structure of board-like material and an optical disk apparatus therewith.

### 2. Description of the Related Art

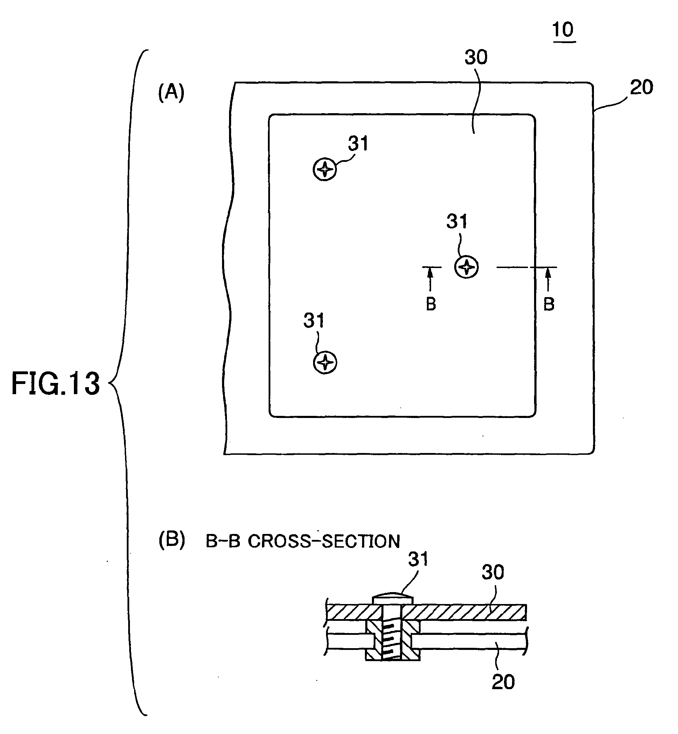

An optical disk apparatus includes an optical baseboard unit assembly. The optical baseboard unit assembly is structured such that an optical baseboard unit is supported on a support baseboard. An optical baseboard unit 10 is structured such that a board 30 serving as weight for removing vibration generated by a disk rotating at high speed is provided on an optical baseboard 20 that mounts a turntable motor (not shown), etc., as shown at (A) and (B) of Fig. 13, where the board 30 is fixed to the optical baseboard 20 by three screws 31, for example.

This structure has been disclosed by JPA 2001-148151.

As described above, three screws 31 are needed, and tightening work of the screws 31 at three places is needed.

### SUMMARY OF THE INVENTION

Accordingly, it is a general object of the present invention to provide a fixing structure of a board, and an optical disk apparatus that includes this fixing structure, that substantially obviates one or more of the problems caused by the limitations and disadvantages of the related art.

Features and advantages of the present invention are set forth in the description that follows, and in part will become apparent from the description and the accompanying drawings, or may be learned by practice of the invention according to the teachings provided in the description. Objects as well as other features and advantages of the present invention will be realized and attained by a fixing structure of a board, and an optical disk apparatus that includes this fixing structure, particularly pointed out in the specification in such full, clear, concise, and exact terms as to enable a person having ordinary skill in the art to practice the invention.

To achieve these and other advantages and in accordance with the purpose of the invention, as embodied and broadly described herein, the invention provides as follows.

The present invention aims at providing a fixing structure of a board, and an optical disk apparatus that includes the fixing structure.

The fixing structure of the present invention provides a slide mechanism for sliding a board on a baseboard, and a lock mechanism for locking the board to the baseboard.

In this manner, fixing of the board to the baseboard is carried out with no screws, dispensing with screw tightening steps of assembly work.

According to the present invention, an eccentric rotor fabricated by an outsert process is provided on the baseboard, and an aperture is formed in the board; the eccentric rotor fits in through the aperture; when the eccentric rotor is rotated, the eccentric rotor pushes an edge of the aperture, and the board slides in relation to the baseboard.

The slide mechanism is of a simple structure.

According to the present invention, the eccentric rotor has a plane section on the side that has the maximum eccentricity of an eccentric projecting portion; the aperture has a straight line-like edge; and when the eccentric rotor is rotated, the plane section of the eccentric projecting portion locks the straight line-like edge, which completes sliding of the board.

This structure provides two advantageous features. Namely, a worker can determine when the rotational operation is complete by feel, and the eccentric rotor does not begin to turn due to vibration, etc.

According to the present invention, a portion that is diametrically opposite to the plane section is excised (removed).

In this manner, the size of the aperture, through which the eccentric projecting portion fits, can be made smaller by the area equivalent to the portion that is excised, which provides a desirable result that the weight board is heavier.

According to the present invention, the lock mechanism for locking the board to the baseboard is constituted by a hook fabricated by an outsert process, having a hook section (projection), prepared on the baseboard, and an aperture, prepared in the board, in which the hook section fits; and when the board is slid, the edge of the aperture is locked by the hook section of the hook.

The lock mechanism is of a simple structure.

The present invention also provides an optical disk apparatus, wherein a baseboard includes a base unit that supports a motor for rotating a turntable that supports a disk, and an optical head for reading information stored by the disk; and the base unit is supported on a supporting base through an insulator, including a weight board that is fixed to the baseboard by the fixing structure of the present invention.

In this manner, screw-tightening work required of the conventional fixing structure is dispensed with; and the weight board is fixed to the baseboard without using a screw, reducing production cost of optical disk apparatuses.

### BRIEF DESCRIPTION OF THE DRAWINGS

Fig. 1 is a plan view of an optical disk apparatus according to an embodiment of the present invention.
Fig. 2 is an elevational view showing the internal structure of the optical disk apparatus shown by Fig. 1.
Fig. 3 is an exploded view of a baseboard unit assembly according to an embodiment.
Fig. 4 is a perspective view showing correspondence of a weight board with a baseboard according to an embodiment.
Fig. 5 contains plan and elevational views for explaining how the weight board is fixed to the baseboard.
Fig. 6 shows plan and bottom views of the baseboard.
Fig. 7 shows exploded views of an eccentric rotor, hooks, and a pin that are formed on the baseboard by outserting.
Fig. 8 is an enlarged plan view of Fig. 7 showing the eccentric rotor and an aperture.
Fig. 9 contains plan views showing how the eccentric rotor pushes the edge of the aperture as the eccentric rotor rotates.
Fig. 10 is a cross-sectional view of a variation of the eccentric rotor.
Fig. 11 is an exploded view of a variation of the structure that fixes the weight board to the baseboard.
Fig. 12 is an exploded view of another variation of the structure that fixes the weight board to the baseboard.
Fig. 13 contains plan and cross-sectional views of a conventional structure that fixes a weight board to a baseboard.

### DESCRIPTION OF THE PREFERRED EMBODIMENTS

In the following, embodiments of the present invention are described with reference to the accompanying drawings.

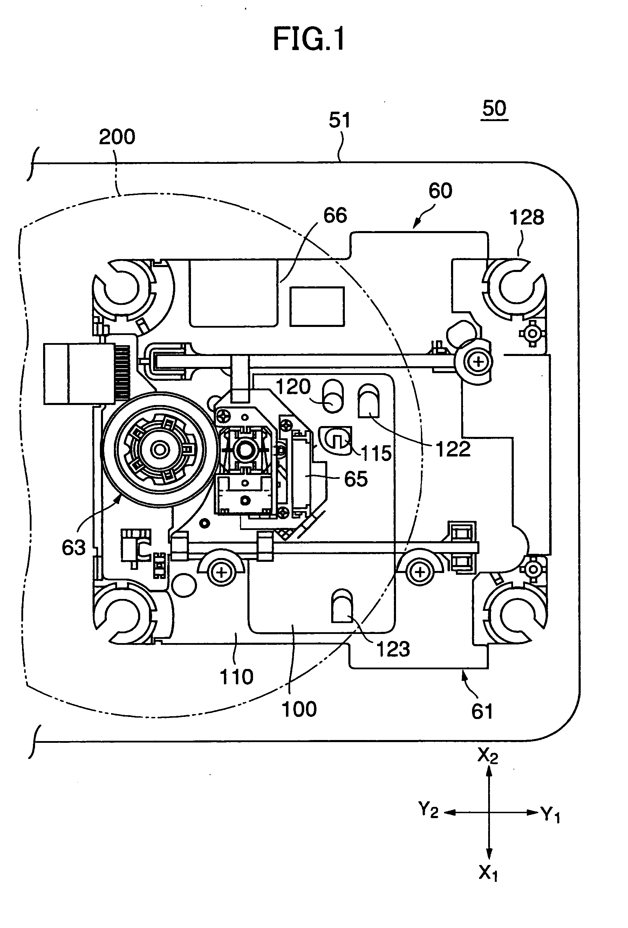

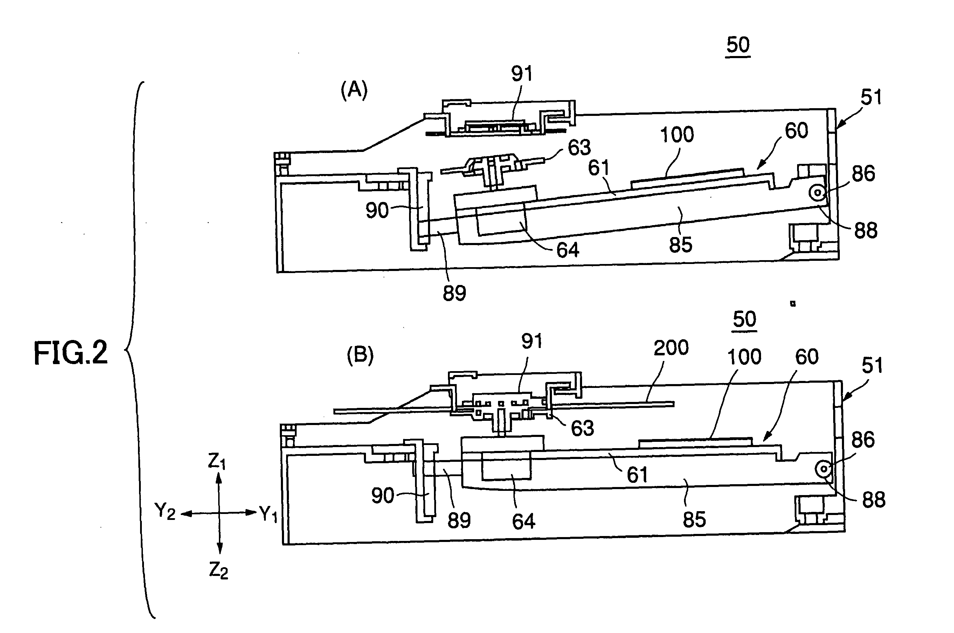

Fig. 1 and Fig. 2 show an optical disk apparatus 50 according to an embodiment of the present invention. In Fig. 2, the section marked (A) shows an initial (idle) state, and the section marked (B) shows a state at the time of reading or writing (i.e., in operation). For sake of facilitating illustration, the disk tray is omitted. As for directions, X1-X2 represents the width direction, Y1-Y2 represents the depth direction, and Z1-Z2 represents the height direction.

The optical disk apparatus 50 includes a housing 51 that is in the shape of a box, a disk tray (not shown), and a baseboard unit assembly 60, the optical disk apparatus 50 being horizontally installed in a computer, for example.

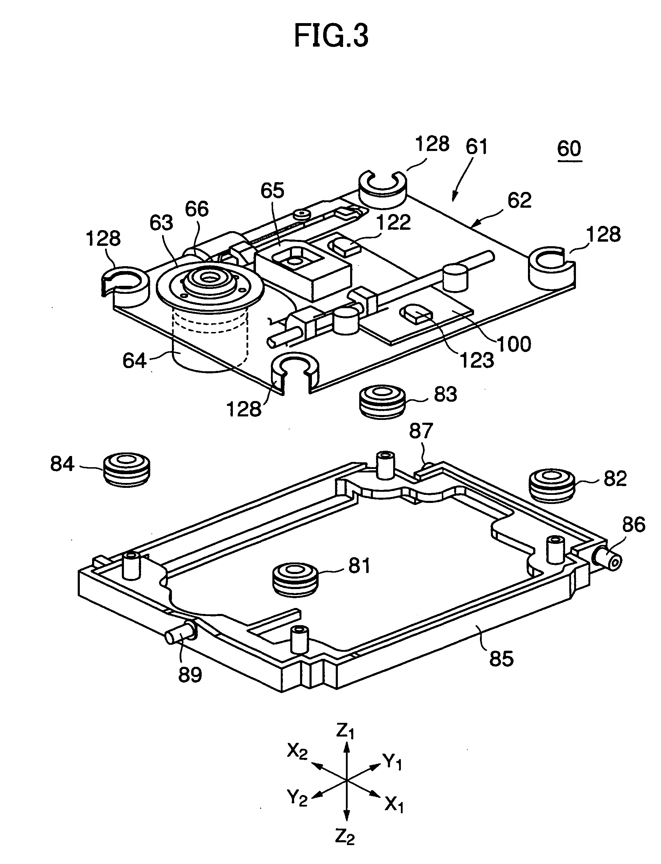

The baseboard unit assembly 60 includes a baseboard unit 61 that is supported by a support baseboard 85 that is in the shape of a square frame, and mounted on flexible insulators 81 through 84 made of rubber for absorbing vibration, the insulators 81 through 84 being provided at the four corners of the baseboard unit assembly 60 and the support baseboard 85, as shown by Fig. 3.

The baseboard unit 61 includes a baseboard 62 that is approximately in the shape of a square, which baseboard 62 further includes a turntable 63 for supporting a CD-ROM disk, a motor 64 for rotating the turntable 63, an optical head 65 for reading information on the CD-ROM disk, a motor 66 for moving the optical head 65, and a weight board 100. The weight board 100 is provided in order to improve reading characteristics of the optical disk apparatus 50, the weight board 100 providing a desired balance of the weight to be applied to the insulators 81 through 84 at the four corners, and setting the position of the center of gravity of the baseboard unit 61 at a desired position, while increasing the weight of the baseboard unit 61.

The baseboard unit assembly 60 is supported in the housing 51 by axles 86 and 87 that are projected in the X1 and X2 directions, respectively, from the support baseboard 85 on the side of Y1, being supported by bearings 88 that are provided to the housing 51 on the side of Y1 (ref. Fig. 2), and a rod 89 provided on the side of Y2 of the support baseboard 85 being supported by a cam slot of a cam 90. When the optical disk apparatus 50 is in an idle state, the baseboard unit assembly 60 stays with its Y2 side lowered, and the turntable 63 is in a lower position as shown by the section marked (A) in Fig. 2. When a CD-ROM disk 200 is placed on a disk tray 20 (not illustrated), the disk tray 20 is moved in the Y1 direction, and the CD-ROM disk 200 is carried into the housing 51. Then, the cam 90 is moved in the Z1 direction, a slot provided to the cam (cam slot) pushes up the rod 89, and the baseboard unit assembly 60 is moved into a level state as shown by the section (B) of Fig. 2. The CD-ROM disk 200 is supported by the turntable 63, separated from the disk tray, and is clamped to the turntable 63 by a clamper 91. Then, the motor 64 rotates the CD-ROM disk 200 and the motor 66 moves the optical head 65 such that the optical head 65 reads the information stored in the CD-ROM disk 200. When a direction to halt the operation is issued, the optical disk apparatus 50 carries out operations in a sequence reverse to the above. That is, the baseboard unit assembly 60 inclines as shown by section (A) of Fig. 2, and the CD-ROM disk 200 is unclamped and discharged outside of the housing 51 by the disk tray (not shown).

Next, the structure for fixing the weight board 100 that serves as the first board to the baseboard 62 that serves as the second board, without using a screw, is explained.

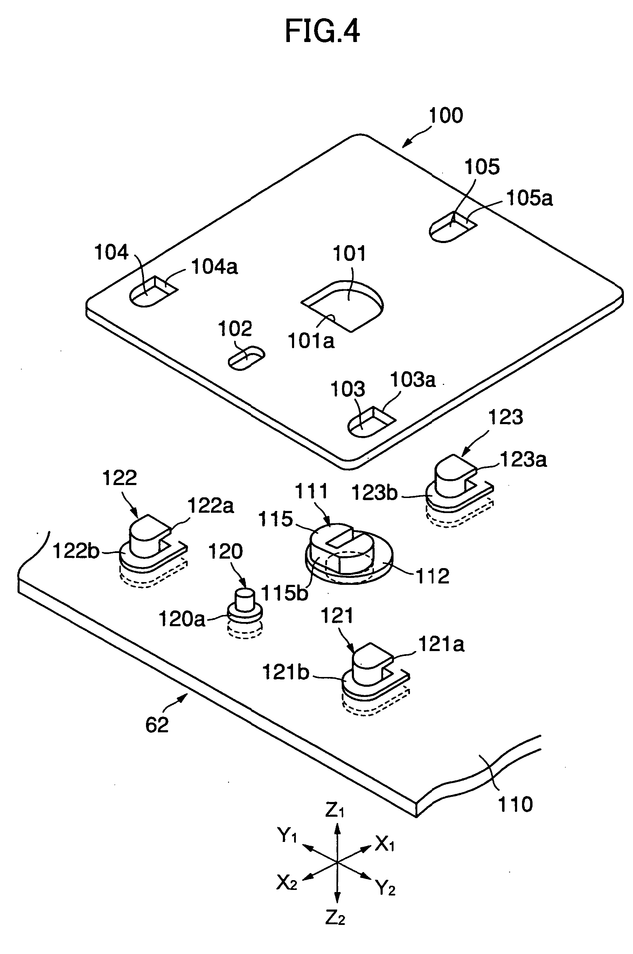

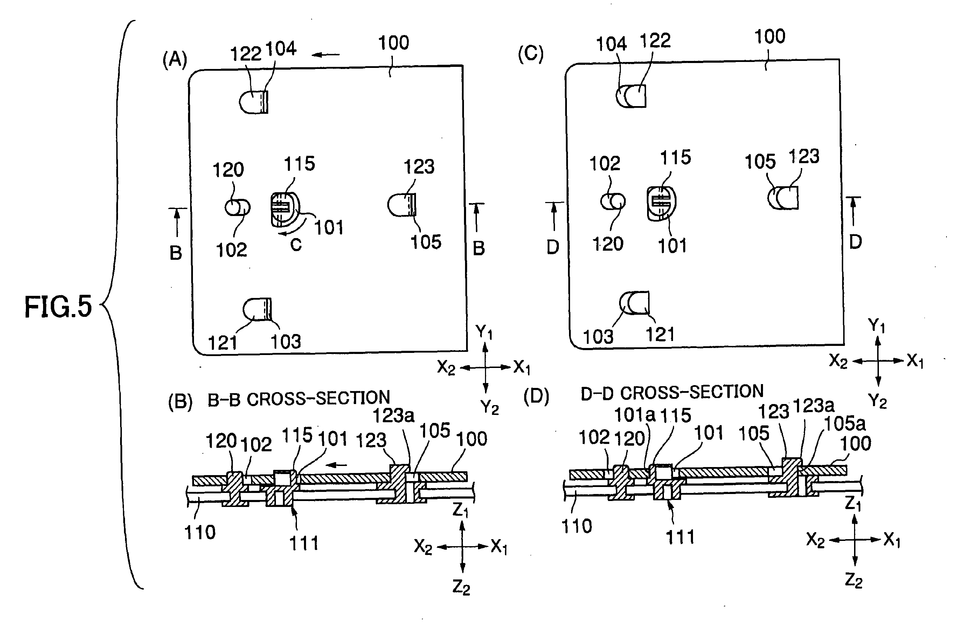

Fig. 4 is a perspective drawing showing a correspondence between the weight board 100 and the baseboard 62. Fig. 5 shows how the weight board 100 is fixed to the baseboard 62. In Fig. 5, the section marked (A) shows the weight board 100 being placed on the baseboard 62, and the section marked (B) shows the cross-section thereof at B-B; the section marked (C) shows the weight board 100 being fixed to the baseboard 62 without using a screw, and the section marked (D) shows the cross-section thereof at D-D.

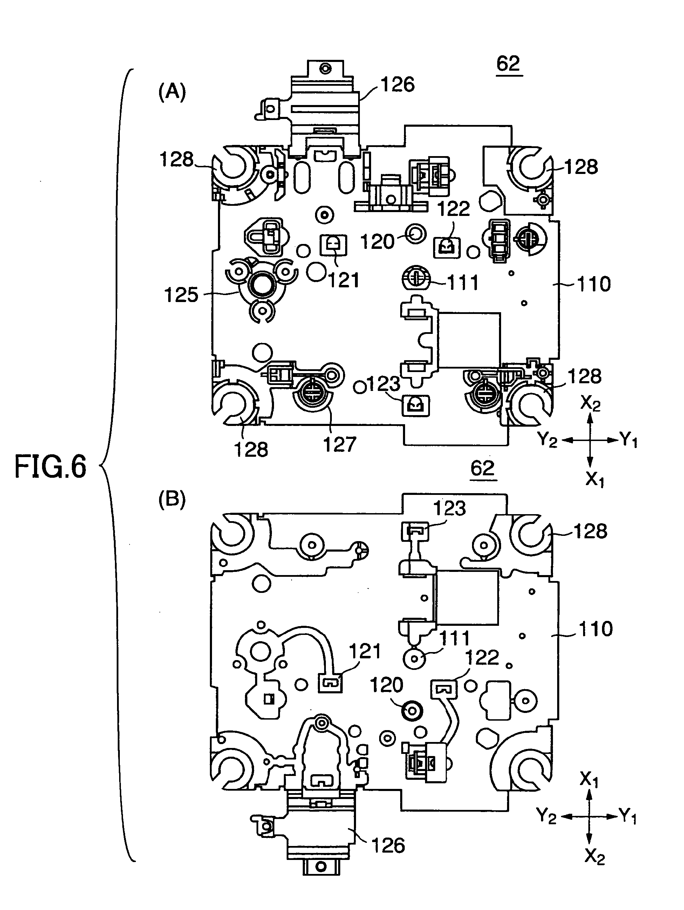

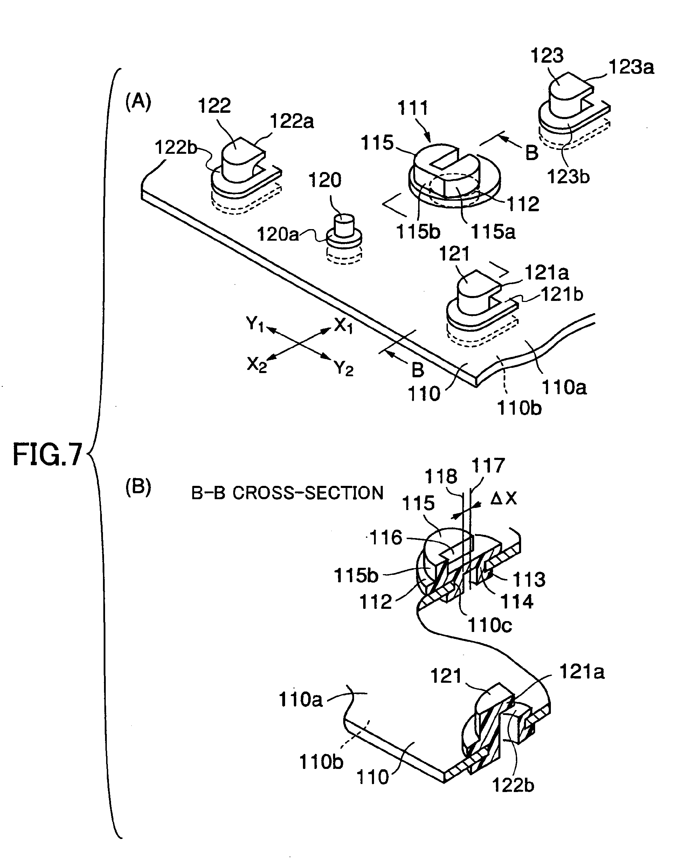

First, the baseboard 62 is explained. Section (A) of Fig. 6 is a plan view of the baseboard 62, and section (B) of Fig. 6 is a bottom plan view of the baseboard 62. Fig. 7 shows details of the portion relating to fixing of the weight board 100 to the baseboard 62.

The baseboard 62 is fabricated by an outsert process carried out on a metal baseboard 110. Specifically, items formed by the outsert fabrication include (refer to Fig. 6) an eccentric rotor 111, three hooks 121 through 123, and a pin 120 for fixing the weight board 100; a portion 125 for supporting the motor 64; a portion 126 in the shape of an aperture-and-closing lid for fixing the motor 66; a portion 127 for supporting a guide rod of the optical head 65; and portions 128 for fitting and inserting the insulators 81 through 84.

In reference to section (A) of Fig. 7, and section (B) of Fig. 7 that is a cross-sectional drawing showing the cross-section B-B of section (A) of Fig. 7, the eccentric rotor 111 includes a flange section 112 on the upper surface 110a of the metal baseboard 110, a flange section 113 on the undersurface 110b of the metal baseboard 110, a connector section 114 in the shape of a pillar connecting the flange section 112 and the flange section 113 through a circular hole 110c in the metal baseboard 110, and an eccentric projecting portion 115 that projects above the flange section 112. The eccentric rotor 111 can be rotated with the connector section 114 serving as the center of rotation. A slot 116 is formed in the eccentric projecting portion 115 such that a tip of a screwdriver fits. A centerline 117 represents the centerline and the rotational axis of the connector section 114. A centerline 118 represents the centerline of the eccentric projecting portion 115. The centerline 118 is apart from the centerline 117 by ΔX, i.e., being made eccentric.

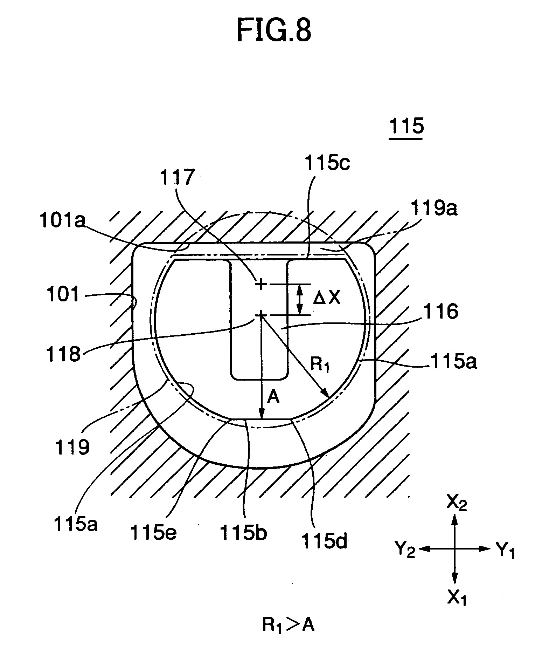

The rotational position of the eccentric projecting portion 115 of the eccentric rotor 111 shown in sections (A) and (B) of Fig. 7 is in a state where the weight board 100 is fixed. Note that a plane section 115b of the eccentric projecting portion 115 faces the X2 direction. Conversely, the rotational position of the eccentric projecting portion 115 of the eccentric rotor section 111 shown in Fig. 8 is in a state where the weight board 100 is yet to be fixed. Note that the plane section 115b of the eccentric projecting portion 115 faces the X1 direction.

The shape of the eccentric projecting portion 115 is explained with reference to Fig. 8. The shape of the eccentric projecting portion 115 basically is a pillar 119 having a radius R1 with its center at the centerline 118. The X1 side of the pillar 119 is flattened, forming the plane section 115b that is delimited by intersections 115d and 115e with circumference portions 115a. On the X2 side of the pillar 119, a wide plane section 115c is formed by removing a portion 119a that is delimited by a line in the Y1-Y2 directions, the shortest distance of the line from the centerline 118 being approximately equal to 1/2 of the radius R1. The radius R1 is greater than a distance A that is the distance between the centerline 118 and the central point of the plane section 115b (shortest distance). In summary, the circumference of the eccentric projecting portion 115 is constituted from the circumference portions 115a, the plane section 115b that is narrow, and the wide plane section 115c. The slot 116 is opened at the wide plane section 115c.

The pin 120 (see Fig. 4 and Fig. 7) is of a pillar shape, and has a flange section 120a on the upper surface 110a of the metal baseboard 110. The hooks 121, 122, and 123 are distributed and arranged around the eccentric rotor 111. Each of the hooks 121, 122, and 123 is shaped like a pillar having a cross-section of approximately a half of an elongated circle (ellipse), wherein the X2 side is a circumference, and the X1 side is a plane; hook sections 121a, 122a, and 123a, respectively, are formed, which project from the X1 side of each hook to the X1 direction; and flange sections 121b, 122b, and 123b, respectively, are formed on the upper surface 110a of the metal baseboard 110.

As shown in Fig. 4, the weight board 100 includes an aperture 101 corresponding to the eccentric projecting portion 115 of the eccentric rotor 111, an aperture 102 corresponding to the pin 120, and apertures 103, 104, and 105 corresponding to the hooks 121, 122, and 123, respectively. The aperture 101 is shaped like approximately a quarter of a circle, having an edge 101a that is in the shape of a straight line that extends in the Y1-Y2 directions on the X2 side. Since the portion equivalent to approximately 1/2 of the radius R1 is removed from the eccentric projecting portion 115 as mentioned above, the size of the aperture 101 is smaller than an aperture that would be required if the eccentric projecting portion 115 were a full pillar. That the size of the aperture 101 is smaller makes the weight of the weight board 100 greater, which is desirable for the weight board 100. The shape of the aperture 102 is of an ellipse, the major axis of which is in the X1-X2 directions. The apertures 103, 104, and 105 are each shaped in the form of about 1/2 of an ellipse, the major axis of which is in the X1-X2 directions, and have edges 103a, 104a, and 105a, respectively, each in the shape of a straight line that extends in the Y1-Y2 directions on the X1 side.

Fixing of the weight board 100 to the baseboard 62 without using a screw is carried out through the following two stages.

The rotational position of the plane section 115b of the eccentric projecting portion 115 of the eccentric rotor 111 is such that it faces the X1 side.

First, the weight board 100 is placed on the baseboard 62 as shown by sections (A) and (B) of Fig. 5. The eccentric projecting portion 115 fits into the aperture 101, the pin 120 fits into the aperture 102, and the hooks 121, 122, and 123, fit into the apertures 103, 104, and 105, respectively. In this manner, the weight board 100 is placed on the baseboard 62 with positions determined. Further, the portions around the apertures 101 through 105 are supported by flange sections 112, 120a and 121b through 123b, respectively.

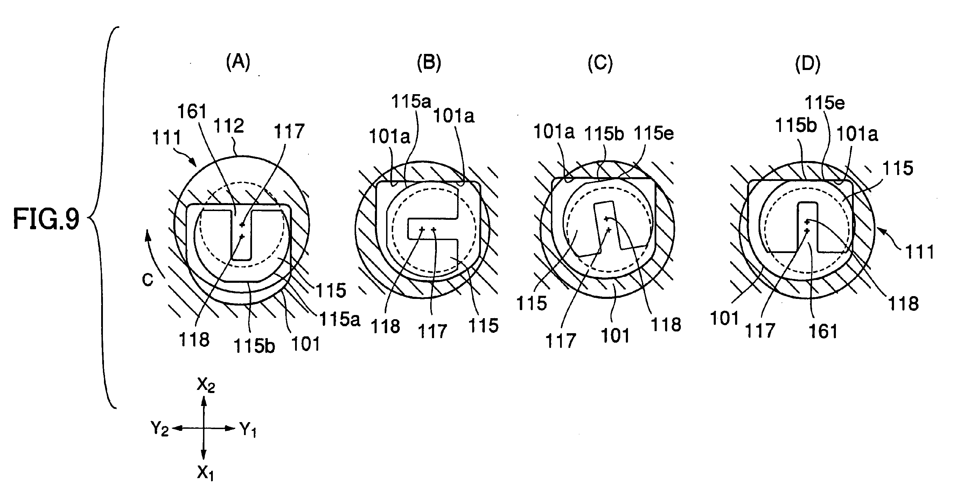

In the next stage, a screwdriver is used. Specifically, the tip of the screwdriver is applied to the slot 116, and is rotated clockwise as shown by C in Fig. 9 such that the eccentric rotor 111 is rotated 180 degrees. Sections (A), (B), (C) and (D) of Fig. 9 show how the eccentric rotor is rotated around the centerline 117 (rotational axis), and the eccentric projecting portion 115 is eccentrically rotated from the original position as shown by section (A) to the final position as shown by section (D) via states shown by sections (B) and (C).

As described above, the eccentric projecting portion 115 rotates inside the aperture 101. At the state shown by section (B) of Fig. 9, the circumference portion 115a pushes the edge 101a, of the aperture 101, the edge 101a having the shape of a straight line. In this manner, the weight board 100 is horizontally pushed, i.e., in the X2 direction. Immediately prior to the final position, the intersection 115e pushes the edge 101a as shown by section (C) of Fig. 9. Then, finally, in section (D) the plane section 115b pushes the edge 101a.

The weight board 100 is pushed in the X2 direction, while the apertures 102 through 105 guide the pin 120 and the hooks 121, 122, and 123, respectively.

When the weight board 100 is pushed and slides in the X2 direction, the edges 103a, 104a, and 105a (that are straight line-like) of the apertures 103, 104, and 105, respectively, come under the hook sections 121a, 122a, and 123a, respectively, and are locked, pushing the hooks 121, 122, and 123, respectively. Moreover, the eccentric rotor 111 pushes the edge of the aperture 101 in the X2 direction, and the hooks 121, 122, and 123 push the edges of the apertures 103, 104, and 105, respectively, in the X1 direction.

Accordingly, as shown by sections (C) and (D) of Fig. 5, the weight board 100 is fixed to the baseboard 62, leaving no freedom to move in any of the X, Y, and Z directions, by turning the eccentric rotor 111, and using no screws. Specifically, motion in the X1-X2 directions is restrained by the eccentric rotor 111 and the hooks 121, 122, and 123. Motion in the Y1-Y2 directions is restrained by the pin 120 and the hook sections 121a, 122a, and 123a. Motion in the Z1 direction is restrained by the hook sections 121a, 122a and 123a. Here, a taper may be provided to each of the hooks 121, 122, and 123, as illustrated only for the hook 122 in Fig. 7, or, alternatively, a taper may be provided to the flange section 112 of the rotor 11 such that the movement in the Z direction is further restricted. In this manner, compared with the conventional practice, the present invention realizes fixing of the weight board 100 to the baseboard 62 with fewer components, and less work.

Here, the three hooks, namely, the hooks 121, 122, and 123 are provided at three points distributed over the weight board 100. Accordingly, the motion is restrained at the three points; and the weight board 100, even if its size is large, is firmly fixed. Further, one operation is sufficient for firmly fixing the weight board 100 to the baseboard 62.

Moreover, when the portion pushing the edge 101a, which is shaped like a straight line, of the aperture 101 in the X2 direction changes from the circumference portion 115a to the plane section 115b, considering the relation of A<R1 (refer to Fig. 8), a worker who operates the screwdriver feels that the load against his/her hand becomes lighter. By this feeling, the worker is able to determine that the rotation is completed to the last position, that is, the eccentric rotor 111 stays as shown by section (D) of Fig. 9, eliminating a risk that the worker stops turning the screwdriver halfway, the screwdriver turning being for rotating the eccentric rotor 111.

If the eccentric rotor 111 is rotated 180 degrees from the state shown by section (D) of Fig. 5, (i.e., the eccentric rotor 111 is rotated back to the original position), the weight board 100 becomes free to move in the X directions, and possibly becomes separated from the baseboard 62. However, since there is the relation R1>A, a certain amount of force is required to start rotating the eccentric rotor 111. Specifically, the intersections 115d and 115e need to push the edge 101a for the eccentric rotor 111 to start rotating from the state shown by section (D) of Fig. 5 such that the weight board 100 is displaced a little in the X2 direction. For this reason, even if vibration or shock is applied, the eccentric rotor 111 does not start rotating from the state shown by section (D) of Fig. 5, and accordingly, the weight board 100 is firmly fixed.

Next, a variation of the structure that fixes the weight board 100 to the baseboard 62 without using a screw is explained.

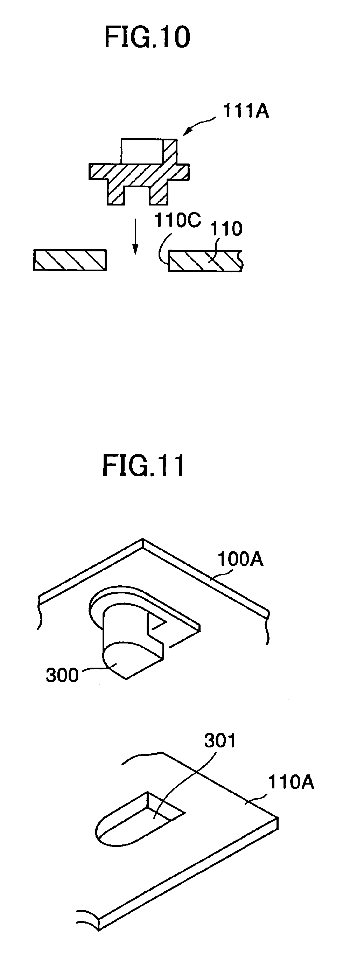

Fig. 10 shows the first variation, wherein an eccentric rotor 111A is not formed by outsert fabrication, but is an independent component, and the eccentric rotor 111A is to be inserted in and attached to a circular hole 110c provided in the metal baseboard 110.

Fig. 11 shows the second variation, wherein a hook 300 is provided to the weight board 100A, and an aperture 301 is provided in the metal baseboard 110A, instead of providing the hooks 121, 122, and 123 to the metal baseboard 110 as described above.

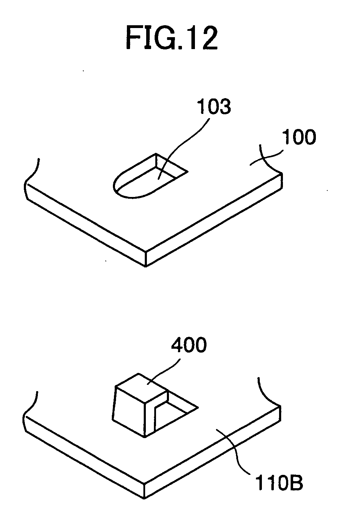

Fig. 12 shows the third variation, wherein a hook 400, corresponding to the above-mentioned hooks 121, 122, and 123, is formed by a press process carried out on a part of a metal baseboard 110B. A press process may be employed to make the hook 400 on the weight board 110B.

Moreover, the present invention is applicable not only to fixing a weight board to a baseboard of an optical disk apparatus, but to fixing any board-shaped component to another board.

As described above, according to the present invention, the structure for fixing a first board (such as the weight board) to a second board (such as the baseboard) carries out fixing by sliding one of the first board and the second board in relation to the other board by a slide mechanism (such as the eccentric rotor pushing the edge of the aperture), and by locking by a lock mechanism (such as the hook and the aperture edge). In this manner, the structure of the present invention requires fewer components (such as screws) and less assembling work than the conventional structure where screws are used.

Further, the present invention is not limited to these embodiments, but various variations and modifications may be made without departing from the scope of the present invention.

The present application is based on Japanese priority application No 2002-372424 filed on 12, 24, 2002 with the Japanese Patent Office, the entire contents of that are hereby incorporated by reference.

## Claims

1. A structure for fixing a first board to a second board, comprising:
a slide mechanism for sliding the first board in relation to the second board, and
a lock mechanism for locking the first board to the second board.

2. The structure for fixing the first board to the second board as claimed in claim 1, wherein said slide mechanism further comprises:
the first board having an aperture formed therein, and
an eccentric rotor formed on the second board,
wherein an eccentric projected portion of said eccentric rotor is projected through the first board aperture, and when said eccentric rotor is rotated, said eccentric projected portion of said eccentric rotor pushes an edge of said first board aperture, thereby said first board slides in relation to said second board.

3. The structure for fixing the first board to the second board as claimed in claim 2, wherein
said eccentric projected portion of said eccentric rotor has a plane section on a side that is off-centered the most, and
said first board aperture has a straight edge that is shaped like a straight line,
wherein sliding of the first board in relation to the second board is completed by rotating said eccentric rotor, and by locking said straight edge by said plane section of said eccentric projecting portion.

4. The structure for fixing the first board to the second board as claimed in claim 3, wherein a portion diametrically opposite to said plane section of said eccentric projecting portion of said eccentric rotor is excised.

5. The structure for fixing the first board to the second board as claimed in claim 1, wherein said lock mechanism for locking the first board to the second board comprises:
a hook provided on the second board, said hook further comprising a hook section, and
the first board having an aperture provided therein, said first board aperture being locked by said hook section of said hook when the first board is slid in relation to the second board.

6. An optical disk apparatus comprising:
a base unit that supports a baseboard,
a motor for rotating a turntable that supports a disk, and
an optical head for reading information stored by the disk; wherein
said base unit is supported on a supporting base through an insulator, and a weight board is fixed to said baseboard by the structure for fixing as claimed in any one of claim 1 through claim 5.
